(19) Europäisches Patentamt
European Patent Office
Office européen des brevets

(11) **EP 1 890 452 A2**

(12) **EUROPEAN PATENT APPLICATION**

(43) Date of publication:
**20.02.2008 Bulletin 2008/08**

(51) Int Cl.:
***H04L 25/02*** *(2006.01)*

(21) Application number: **07113543.8**

(22) Date of filing: **31.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.08.2006 GB 0616472**

(71) Applicant: **Fujitsu Ltd.**
**Kawasaki-shi, Kanagawa 211-8588 (JP)**

(72) Inventors:
• **Zhou, Yuefeng**
**Haywards Heath, West Sussex RH16 1UZ (GB)**
• **Hart, Michael John Beems**
**London, W12 9LL (GB)**
• **Vadgama, Sunil Keshavji**
**Ashford, Middlesex TW15 3RD (GB)**

(74) Representative: **Wilding, Frances Ward**
**Haseltine Lake**
**Lincoln House**
**300 High Holborn**
**London WC1V 7JH (GB)**

(54) **Communication systems**

(57) A wireless transmission method for use in a wireless communication system, the system comprising at least two communication apparatuses which may experience relative movement therebetween, one said communication apparatus comprising a source apparatus, and the other said communication apparatus comprising a destination apparatus; said source apparatus being operable to transmit information to the destination apparatus, the method comprising: at two or more time instants, obtaining a measure of channel characteristics between the source apparatus and the destination apparatus; calculating a correlation factor between the at least two time-consecutive measures over time; employing the correlation factor or a value derived therefrom as an estimate of relative movement between the source apparatus and the destination apparatus in determining a transmission parameter; and then transmitting a transmission signal from the source apparatus to the destination apparatus using the determined parameter.

Figure 3: The correlation factor curves in downlink subframe. (Downlink PUSC in IEEE802.16e, SNR=12.5dB)

**Description**

**Introduction**

The present application relates to multihop and single hop techniques. Currently there exists significant interest in the use of multihop techniques in packet based radio and other communication systems, where it is purported that such techniques will enable both extension in coverage range and increase in system capacity (throughput).

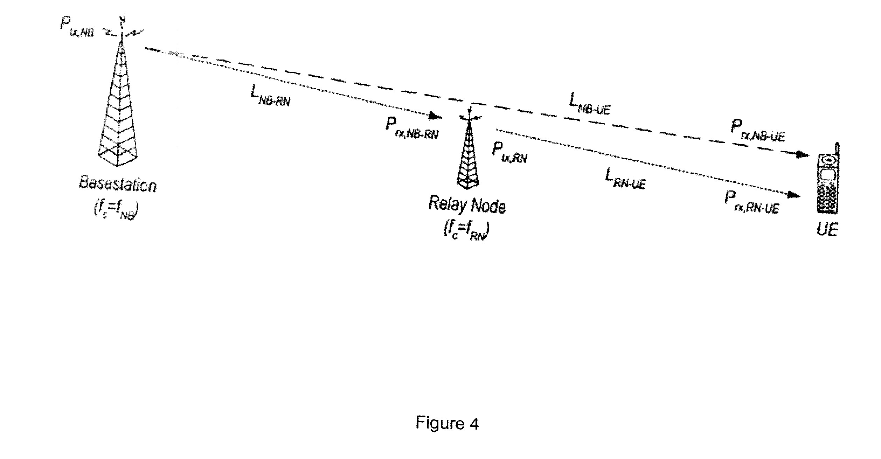

In a multi-hop communication system, communication signals are sent in a communication direction along a communication path (C) from a source apparatus to a destination apparatus via one or more intermediate apparatuses. Figure 4 illustrates a single-cell two-hop wireless communication system comprising a base station BS (known in the context of 3G communication systems as "node-B" NB) a relay node RN (also known as a relay station RS) and a user equipment UE (also known as mobile station MS). In the case where signals are being transmitted on the downlink (DL) from a base station to a destination user equipment (UE) via the relay node (RN), the base station comprises the source station (S) and the user equipment comprises the destination station (D). In the case where communication signals are being transmitted on the uplink (UL) from a user equipment (UE), via the relay node, to the base station, the user equipment comprises the source station and the base station comprises the destination station. The relay node is an example of an intermediate apparatus (I) and comprises: a receiver, operable to receive data from the source apparatus; and a transmitter, operable to transmit this data, or a derivative thereof, to the destination apparatus.

Simple analogue repeaters or digital repeaters have been used as relays to improve or provide coverage in dead spots. They can either operate in a different transmission frequency band from the source station to prevent interference between the source transmission and the repeater transmission, or they can operate at a time when there is no transmission from the source station.

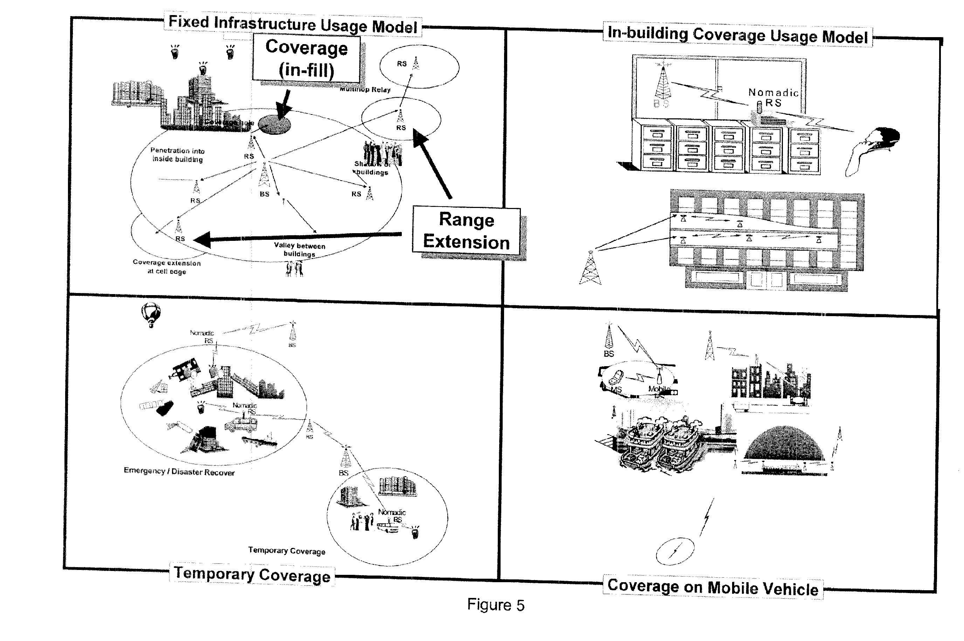

Figure 5 illustrates a number of applications for relay stations. For fixed infrastructure, the coverage provided by a relay station may be "in-fill" to allow access to the communication network for mobile stations which may otherwise be in the shadow of other objects or otherwise unable to receive a signal of sufficient strength from the base station despite being within the normal range of the base station. "Range extension" is also shown, in which a relay station allows access when a mobile station is outside the normal data transmission range of a base station. One example of in-fill shown at the top right of Figure 5 is positioning of a nomadic relay station to allow penetration of coverage within a building that could be above, at, or below ground level.

Other applications are nomadic relay stations which are brought into effect for temporary cover, providing access during events or emergencies/disasters. A final application shown in the bottom right of Figure 5 provides access to a network using a relay positioned on a vehicle.

Relays may also be used in conjunction with advanced transmission techniques to enhance gain of the communications system as explained below.

It is known that the occurrence of propagation loss, or pathloss, due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, sub-urban, rural), details of morphology such as height, density, separation, terrain type (hilly, flat). The pathloss L (dB) between a transmitter and a receiver can be modelled by:

$$L = b + 10n \log d \qquad (A)$$

Where d (metres) is the transmitter-receiver separation, b(db) and n are the pathloss parameters and the absolute pathloss is given by $l = 10^{(L/10)}$.

The sum of the absolute path losses experienced over the indirect link SI + ID may be less than the pathloss experienced over the direct link SD. In other words it is possible for:

$$L(SI) + L(ID) < L(SD) \qquad (B)$$

Splitting a single transmission link into two shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) can be achieved if a signal is sent from a source apparatus to a destination apparatus via an intermediate apparatus (e.g. relay node), rather than being sent directly from the source apparatus to the destination apparatus. If implemented appropriately, multi-hop communication systems can allow for a reduction in the transmit power of transmitters which facilitate wireless transmissions, leading to a reduction in interference levels as well as decreasing exposure to electromagnetic emissions. Alternatively, the reduction in overall pathloss can be exploited to improve the received signal quality at the receiver without an increase in the overall radiated transmission power required to convey the signal.

Multi-hop systems are suitable for use with multi-carrier transmission. In a multi-carrier transmission system, such as FDM (frequency division multiplex), OFDM (orthogonal frequency division multiplex) or DMT (discrete multi-tone), a single data stream is modulated onto N parallel sub-carriers, each sub-carrier signal having its own frequency range. This allows the total bandwidth (i.e. the amount of data to be sent in a given time interval) to be divided over a plurality of sub-carriers thereby increasing the duration of each data symbol. Since each sub-carrier has a lower information rate, multi-carrier systems benefit from enhanced immunity to channel induced distortion compared with single carrier systems. This is made possible by ensuring that the transmission rate and hence bandwidth of each subcarrier is less than the coherence bandwidth of the channel. As a result, the channel distortion experienced on a signal subcarrier is frequency independent and can hence be corrected by a simple phase and amplitude correction factor. Thus the channel distortion correction entity within a multicarrier receiver can be of significantly lower complexity of its counterpart within a single carrier receiver when the system bandwidth is in excess of the coherence bandwidth of the channel.

Orthogonal frequency division multiplexing (OFDM) is a modulation technique that is based on FDM. An OFDM system uses a plurality of sub-carrier frequencies which are orthogonal in a mathematical sense so that the sub-carriers spectra may overlap without interference due to the fact they are mutually independent. The orthogonality of OFDM systems removes the need for guard band frequencies and thereby increases the spectral efficiency of the system. OFDM has been proposed and adopted for many wireless systems. It is currently used in Asymmetric Digital Subscriber Line (ADSL) connections, in some wireless LAN applications (such as WiFi devices based on the IEEE802.11a/g standard), and in wireless MAN applications such as WiMAX (based on the IEEE 802.16 standard). OFDM is often used in conjunction with channel coding, an error correction technique, to create coded orthogonal FDM or COFDM. COFDM is now widely used in digital telecommunications systems to improve the performance of an OFDM based system in a multipath environment where variations in the channel distortion can be seen across both subcarriers in the frequency domain and symbols in the time domain. The system has found use in video and audio broadcasting, such as DVB and DAB, as well as certain types of computer networking technology.

In an OFDM system, a block of N modulated parallel data source signals is mapped to N orthogonal parallel sub-carriers by using an Inverse Discrete or Fast Fourier Transform algorithm (IDFT/IFFT) to form a signal known as an OFDM symbol □in the time domain at the transmitter. Thus, an OFDM symbol is the composite signal of all N sub-carrier signals. An OFDM symbol can be represented mathematically as:

$$x(t) = \frac{1}{\sqrt{N}} \sum_{n=0}^{N-1} c_n . e^{j2\pi n \Delta f t}, 0 \le t \le T_s \qquad (1)$$

where $\Delta f$ is the sub-carrier separation in Hz, Ts = 1/$\Delta f$ is symbol time interval in seconds, and $c_n$ are the modulated source signals. The sub-carrier vector in (1) onto which each of the source signals is modulated $c \in C_n$, c = ($c_0$, $c_1$..$c_{N-1}$) is a vector of N constellation symbols from a finite constellation. At the receiver, the received time-domain signal is transformed back to frequency domain by applying Discrete Fourier Transform (DFT) or Fast Fourier Transform (FFT) algorithm.

OFDMA (Orthogonal Frequency Division Multiple Access) is a multiple access variant of OFDM. It works by assigning a subset of sub-carriers, to an individual user. This allows simultaneous transmission from several users leading to better spectral efficiency. However, there is still the issue of allowing bi-directional communication, that is, in the uplink and download directions, without interference.

In order to enable bi-directional communication between two nodes, two well known different approaches exist for duplexing the two (forward or download and reverse or uplink) communication links to overcome the physical limitation that a device cannot simultaneously transmit and receive on the same resource medium. The first, frequency division duplexing (FDD), involves operating the two links simultaneously but on different frequency bands by subdividing the transmission medium into two distinct bands, one for forward link and the other for reverse link communications. The second, time division duplexing (TDD), involves operating the two links on the same frequency band, but subdividing the access to the medium in time so that only the forward or the reverse link will be utilizing the medium at any one point in time. Both approaches (TDD & FDD) have their relative merits and are both well used techniques for single hop wired and wireless communication systems. For example the IEEE802.16 standard incorporates both an FDD and TDD mode.

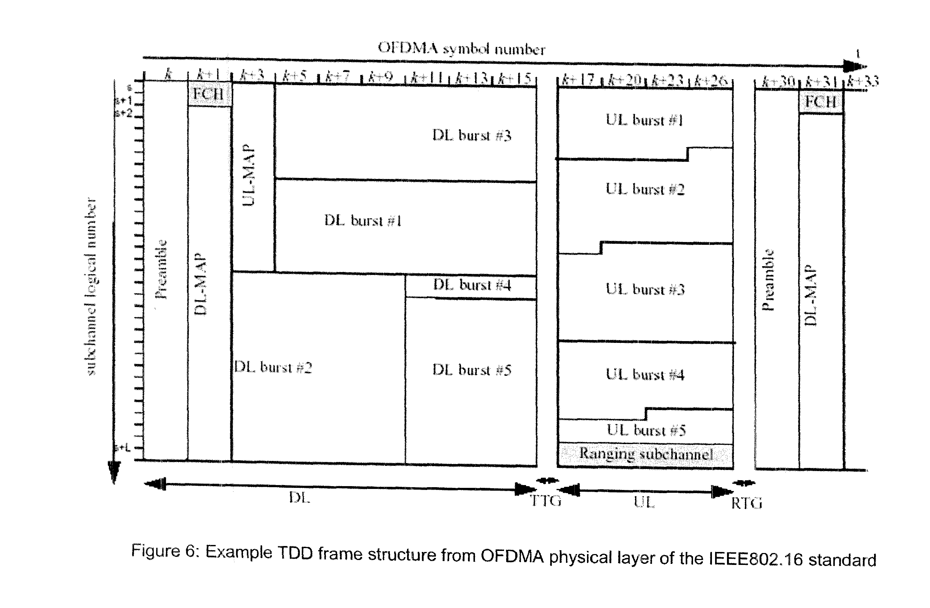

As an example, Figure 6 illustrates the single hop TDD frame structure used in the OFDMA physical layer mode of the IEEE802.16 standard (WiMAX).

Each frame is divided into DL and UL subframes, each being a discrete transmission interval. They are separated by Transmit/Receive and Receive/Transmit Transition Guard interval (TTG and RTG respectively). Each DL subframe starts with a preamble followed by the Frame Control Header (FCH), the DL-MAP, and the UL-MAP.

The FCH contains the DL Frame Prefix (DLFP) to specify the burst profile and the length of the DL-MAP. The DLFP is a data structure transmitted at the beginning of each frame and contains information regarding the current frame; it is mapped to the FCH.

Simultaneous DL allocations can be broadcast, multicast and unicast and they can also include an allocation for another BS rather than a serving BS. Simultaneous ULs can be data allocations and ranging or bandwidth requests.

This patent application is one of a set of ten UK patent applications filed on the same date by the same applicant with agent reference numbers P106752GB00, P106753GB00, P106754GB00, P106772GB00, P106773GB00, P106795GB00, P106796GB00, P106797GB00, P106798GB00, and P106799GB00, describing interrelated inventions proposed by the present inventors relating to communication techniques. The entire contents of each of the other nine applications is incorporated herein by way of reference thereto and copies of each of the other nine applications are filed herewith.

The mobility (or relative movement between a transmitting apparatus and the corresponding receiving apparatus) is an important characteristic of mobile stations (MSs), relay stations (RSs), and other wireless communication devices. Mainly, it determines the radio channel characteristics, such as radio channel coherent time. Therefore, radio devices will rely on the mobility estimation to adapt to dynamically changing radio channel conditions.

For example, in OFDMA-based WiMAX, in light of the mobility of MS, the base station (BS) will arrange service connections to a corresponding permutation zone having a certain subcarrier allocation mode. For instance, low mobility MSs will be arranged to communicate within AMC permutation zone. Moreover, based on the knowledge of mobility, a BS also can adjust the dimension of the burst to optimize the diversity gain in both time dimension and in frequency dimension.

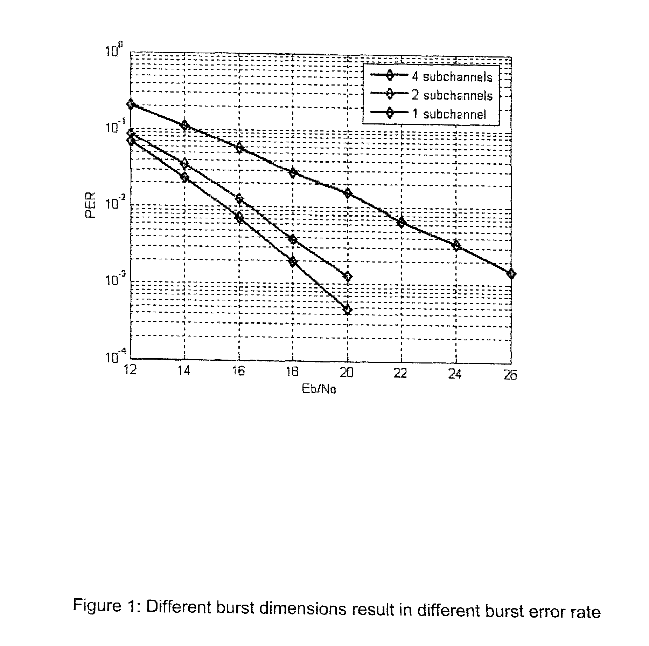

Figure 1 shows the burst error rate for different burst dimensions with fixed payload, which is 4 slots. The channel model is ITU Pedestrian B with a velocity of 3km/hr. It is clear that increasing the size of the burst in frequency dimension for low mobility MS can result in better burst error rate performance.

Therefore, the mobility estimation is important to optimize the performance of radio systems. Embodiments of the invention provide approaches to accurately estimate mobility for wireless communications.

The invention is defined in the independent claims, to which reference should now be made. Advantageous embodiments are set out in the sub claims.

Preferred features of the present invention will now be described, purely by way of example, with reference to the accompanying drawings, in which:-

Figure 1 shows different burst dimensions result in different burst error rate;

Figure 2 shows the SINR is strongly affected by the interference from neighbouring cells;

Figure 3 shows the correlation factor curves in downlink subframe. (Downlink PUSC in IEEE802.16e, SNR=12.5dB);

Figure 4 shows a single-cell two-hop wireless communication system;

Figure 5 shows applications of relay stations; and

Figure 6 shows a single hop TDD frame structure used in the OFDMA physical layer mode of the IEEE 802.16 standard.

Previously, the standard deviation of CINR (Carrier-Interference-Noise Ratio) has been used to estimate the mobility. The CINR measurement can be defined by:

$$CINR_k = \gamma_k = \frac{\sum_n |s_{k,n}|^2}{\sum_n |r_{k,n} - s_{k,n}|^2} \tag{1}$$

where $r_{k,n}$ is the $n^{th}$ received sample within the message measured in the $k^{th}$ frame, and $s_{k,n}$ is the corresponding preamble or pilot samples of the transmitter of interest with channel state weighting applied.

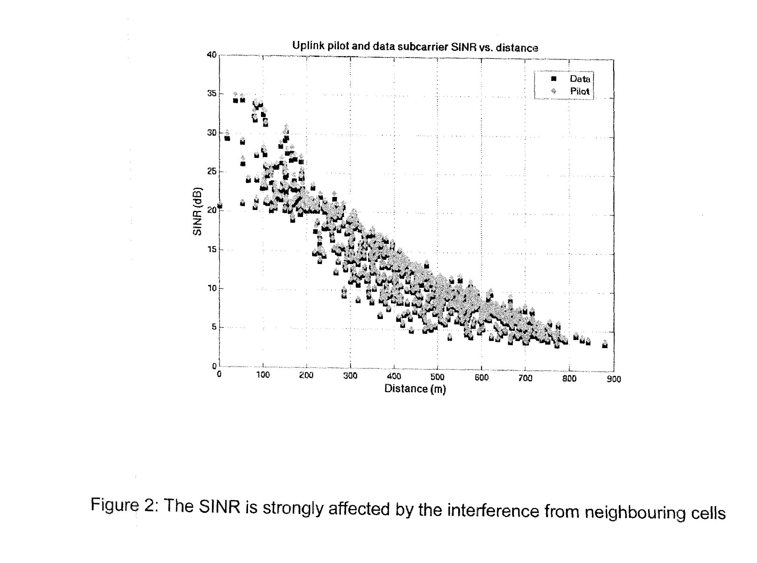

The inventors have come to the realisation that estimation based on CINR will strongly impacted by noise and interference in communication systems. For example, in multi-cell systems, the interference will be affected by the users in neighbouring cells. Figure 2 shows the SINR of pilot and data subcarriers vs. the distance between the base station and radio devices in a multi-cell OFDMA system. Obviously, the SINR is strongly influenced by the interference from neighbouring cells. Therefore, the standard deviation of CINR cannot reflect the mobility accurately.

Embodiments of the invention give an approach to estimate the mobility of radio devices with higher accuracy, for example, in low SNR environment.

The preferred method below is based on the frequency domain channel-gain-vector correlation factor (CGVCF, Channel-Gain-Vector Correlation Factor), which has three main steps.

**Step One: Obtaining the frequency domain instantaneous channel gain vectors, $\mathbf{H}_{kT_s}$.**

$\mathbf{H}_{kT_s}$ can be depicted as:

$$\mathbf{H}_{kT_s} = \{ H_{kTs}(f_0) \quad H_{kTs}(f_1) \quad \cdots \quad H_{kTs}(f_n) \} \tag{2}$$

where Ts is the sampling period in time domain, $f_n$ is the sampling point in frequency domain. $H_{kTs}(f_n)$ is the instantaneous channel gain at frequency point of $f_n$.

$H_{kTs}(f_n)$ can be obtained by frequency domain channel estimation method.

In normal OFDM or OFDMA based system. $kT_S$ can be equivalent to integral times of symbol durations. $f_n$ can be the subcarrier frequency of pre-decided sequences in frequency domain, such as pilots, and preamble. For example, frequency domain instantaneous channel gain vector $\mathbf{H}_{kT_s}$ can be easily obtained by pilots in frequency domain, which can be written as:

$$\mathbf{H}_{kT_s} = \frac{\mathbf{P}_{RX\_k}}{\mathbf{P}_{TX\_k}} \tag{3}$$

where $\mathbf{P}_{RX\_k}$ is the received pilots in frequency domain within the $k^{th}$ symbol (assuming $T_S$ equals symbol duration), $\mathbf{P}_{TX\_k}$ is the transmitted pilots in frequency domain within the $k^{th}$ symbol.

After this step, a sequence of frequency domain channel gain vector, $\mathbf{H}$, can be obtained as below:

$$\mathbf{H} = \{ \mathbf{H}_{T_s} \quad \mathbf{H}_{2T_s} \quad \cdots \quad \mathbf{H}_{kT_s} \quad \cdots \quad \mathbf{H}_{NT_s} \} \tag{4}$$

where $N$ is the length of the sequence.

**Step two: Computing CGVCF**

A CGVCF between $\mathbf{H}_{kT_s}$, and $\mathbf{H}_{(k+m)T_s}$ can be written as:

$$\rho_{k,k+m} = \frac{E\left\{\mathbf{H}_{kT_s} \cdot \mathbf{H}_{(k+m)T_s}\right\} - E\left\{\mathbf{H}_{kT_s}\right\} \cdot E\left\{\mathbf{H}_{(k+m)T_s}\right\}}{\sigma\left\{\mathbf{H}_{kT_s}\right\} \cdot \sigma\left\{\mathbf{H}_{(k+m)T_s}\right\}} \tag{5}$$

where $E\{\cdot\}$ is the expectation, $\sigma\{\cdot\}$ is the standard deviation.

Let $\rho_m$ be the correlation factor between two frequency domain channel gain vectors with the time difference of $mT$. By applying (5) to the sequence (4), a sequence of correlation factors can be obtained as below:

$$\boldsymbol{\rho} = \left\{\rho_1 \quad \rho_2 \quad \cdots \quad \rho_m \quad \cdots \quad \rho_{N-1}\right\} \tag{6}$$

Averaging methods can be used for calculating $\rho_m$ to decrease the effect of noise. For example, $\rho_m$ can be calculated by:

$$\rho_m = \frac{1}{M}\sum_M \rho_{i,j} \qquad i \in [1,N]; \quad j \in [1,N]; \quad j - i = m \tag{7}$$

where $i$, and $j$ are the all possible numbers between 1 and $N$, and satisfying the condition of $j - i = m$.

Also, averaging methods can be used for calculating $\rho$ to decrease the effect of noise. For example, if $\rho_a$, and $\rho_b$ are calculated from $\mathbf{H}_a$, and $\mathbf{H}_b$ respectively, a sequence of $\rho$ can be:

$$\boldsymbol{\rho} = a \cdot \boldsymbol{\rho}_a + (1 - \alpha) \cdot \boldsymbol{\rho}_b \qquad 1 > \alpha > 0 \tag{8}$$

**Step Three: Estimating Mobility.**

The mobility can be estimated by following optional methods:

i. The mobility can be estimated by the grads (gradient) of $\rho$. A bigger value of the grads of $\rho$ means a higher mobility;

ii. In high SNR environment, the mobility can be estimated by the deviation of $\rho$. A bigger value of the deviation of $\rho$ means a higher mobility;

iii. In high SNR environment, the mobility can be estimated by the expectation of $\rho$. A bigger value of the expectation of $\rho$ means a lower mobility;

iv. In high SNR environment, the mobility can be estimated by the value of $\rho_m$. A bigger value of $\rho_m$ means a lower mobility;

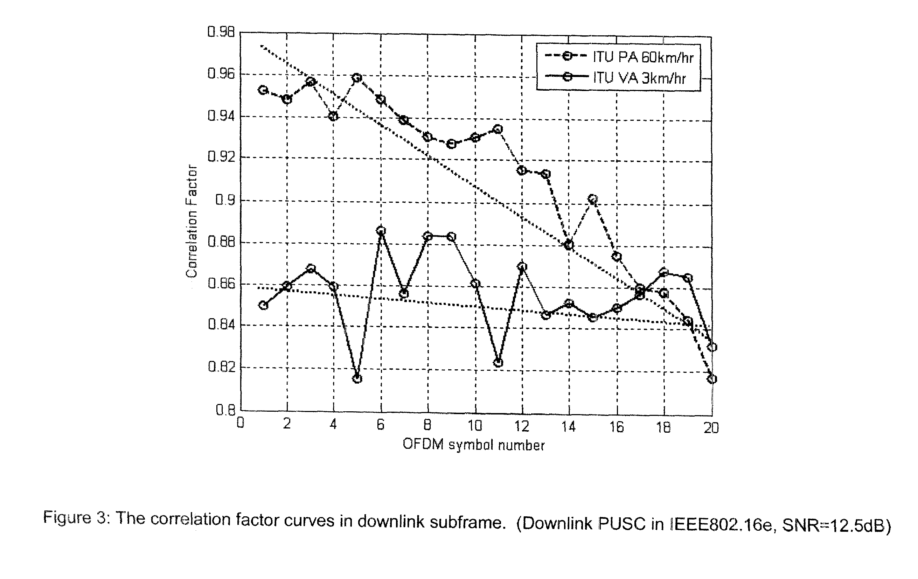

Figure 3 shows an example of the calculated correlation factor of channel gain vectors. The dash and solid curves are the correlation factor curves computed within OFDMA-based WiMAX downlink subframe. The black dot lines are plotted by linear curve fitting so that we can see the difference of the grads in different mobility environment. The SNR in the simulation is 12dB.

Normally, in low noise environment, the higher values of correlation factor means lower mobility. From the Figure, we can find that the relationship between the correlation factor and velocity has been entirely damaged by the noise. By the same reason, we can expect that the CINR cannot accurately estimate mobility in noise environment.

However, the mobility still can be easily identified by the grads of the correlation factors. Therefore, the method, estimating mobility by the grads of $\rho$, will have a good performance in low SNR environment.

**Main benefits**

Invention embodiments give approaches to estimate the mobility for wireless communication devices. The benefits from this patent are:

1. The proposed method gives a higher accuracy in low SNR environment to estimate the mobility of radio devices;
2. Since the mobility is an essential parameter with wide range of applications, such as radio resource management algorithms, routing, and channel estimation etc, the proposed methods can be used for enhancing these algorithms in wireless communication devices.
3. By implementing mobility estimation algorithms presented in this proposal, a wireless communication device can adapt to dynamically changing radio channel conditions, thus improving the performance.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

**Claims**

1. A wireless transmission method for use in a wireless communication system, the system comprising at least two communication apparatuses which may experience relative movement therebetween, one said communication apparatus comprising a source apparatus, and the other said communication apparatus comprising a destination apparatus; said source apparatus being operable to transmit information to the destination apparatus, the method comprising:

   at two or more time instants, obtaining a measure of channel characteristics between the source apparatus and the destination apparatus;
   calculating a correlation factor between the at least two time-consecutive measures over time;
   employing the correlation factor or a value derived therefrom as an estimate of relative movement between the source apparatus and the destination apparatus in determining a transmission parameter; and then
   transmitting a transmission signal from the source apparatus to the destination apparatus using the determined parameter.

2. A method according to claim 1 wherein the measure of channel characteristics is a channel gain measure.

3. A method according to claim 2 the channel gain measure is a frequency domain vector.

4. A method according to claim 3 wherein the channel gain measure is calculated using preamble and/or other predetermined sequences in the frequency domain.

5. A method according to any of the preceding claims including producing a sequence of correlation factors over time, and employing the sequence of correlation factors as an estimate of relative movement.

6. A method according to claim 5, wherein each correlation factor in the sequence is produced using an expectation and deviation method.

7. A method according to claim 5 or 6 including using an averaging method between consecutive correlation factors in the sequence, so as to decrease the effect of noise.

8. A method according to claim 5, 6 or 7 including using an averaging method to calculate individual correlation factors in the sequence, so as to decrease the effect of noise.

9. A method according to any of the preceding claims wherein a value as an estimate of relative movement is derived from a sequence of correlation factors by calculating the gradient of the sequence.

10. A method according to any of the preceding claims wherein a value as an estimate of relative movement is derived from a sequence of correlation factors by calculating a deviation of the sequence.

11. A method according to any of the preceding claims wherein a value as an estimate of relative movement is derived from a sequence of correlation factors by calculating the expectation of the sequence.

12. A method according to any of claims 1 to 4 wherein the correlation factor is used to estimate relative movement in a high SNR.

13. A method according to any of the preceding claims wherein the transmission parameter is a mode of transmission selected from at least two available modes and including the step of changing from transmission in a first mode to transmission in a second mode according to the correlation factor or a value derived therefrom.

14. A method according to claim 8 wherein a separate threshold is defined for changing from the first to the second mode and from the second to the first mode, to give a hysteresis margin.

15. A method according to any of the preceding claims wherein the transmission parameter determined is the subcarrier allocation mode in an OFDM or OFDMA system.

16. A wireless transmission method for use in an OFDM communication system, the system comprising at least two communication apparatuses, one said communication apparatus comprising a source apparatus, and the other said communication apparatus comprising a destination apparatus; said source apparatus being operable to transmit information to the destination apparatus, the method comprising:

> obtaining the frequency domain instantaneous channel gain vector between the source station and the destination station;
> computing the channel gain vector correlation factor from the frequency domain instantaneous channel gain vector;
> estimating relative movement between the source apparatus and the destination apparatus based on the channel gain vector correlation factor; and
> transmitting information in a transmission signal from the source apparatus to the destination apparatus, the transmission signal having at least one transmission parameter determined by the estimated relative movement.

17. A method according to any of the preceding method claims wherein the source apparatus is a relay station and the destination apparatus is a mobile station, and the method estimates mobility between the relay station and the mobile station.

18. A method according to any of the preceding method claims wherein the source apparatus is a base station and the destination apparatus is a relay station, and the method estimates mobility between the base station and the relay station.

19. A method according to any of the preceding method wherein the source apparatus is a relay station and the destination apparatus is another relay station, and the method estimates mobility between the two relay stations.

20. A method according to any preceding claim, wherein the source apparatus is a base station and the destination apparatus is a mobile station, and wherein the method estimates mobility between the base station and the mobile station.

21. A method according to any preceding claim, wherein the source apparatus is a mobile station and the destination apparatus is a base station, and wherein the method estimates mobility between the mobile station and the base station.

22. A method according to any preceding claim, wherein the source apparatus is a relay station and the destination apparatus is a mobile station, and wherein the method estimates mobility between the relay station and the mobile station.

**23.** A method according to any preceding claim, wherein the source apparatus is a mobile station and the destination apparatus is a relay station, and wherein the method estimates mobility between the mobile station and the relay station.

**24.** A wireless transmission system comprising at least two communication apparatuses which may experience relative movement therebetween, one said communication apparatus comprising a source apparatus, and the other said communication apparatus comprising a destination apparatus; said source apparatus being operable to transmit information to the destination apparatus, the system comprising:

obtaining means for obtaining a measure of channel characteristics between the source apparatus and the destination apparatus at two or more time instants;
calculating means for calculating a correlation factor between the at least two time-consecutive measures over time;
determining means for employing the correlation factor or a value derived therefrom as an estimate of relative movement between the source apparatus and the destination apparatus in determining a transmission parameter; and
transmission means for transmitting a transmission signal from the source apparatus to the destination apparatus using the determined parameter.

**25.** A source apparatus of a wireless communication system, the transmission system comprising at least two communication apparatuses which may experience relative movement therebetween, one said communication apparatus comprising the source apparatus, and the other said communication apparatus comprising a destination apparatus; said source apparatus being operable to transmit information to the destination apparatus, the source apparatus comprising:

obtaining means for obtaining a measure of channel characteristics between the source apparatus and the destination apparatus at two or more time instants;
calculating means for calculating a correlation factor between the at least two time-consecutive measures over time;
determining means for employing the correlation factor or a value derived therefrom as an estimate of relative movement between the source apparatus and the destination apparatus in determining a transmission parameter; and
transmission means for transmitting a transmission signal from the source apparatus to the destination apparatus using the determined parameter.

**26.** A computer program which, when executed by a computing device of a source apparatus of a communication system, causes the source apparatus to carry out a transmission method, the system comprising at least two communication apparatuses which may experience relative movement therebetween, one said communication apparatus comprising the source apparatus, and the other said communication apparatus comprising a destination apparatus; said source apparatus being operable to transmit information to the destination apparatus, the method comprising:

at two or more time instants, obtaining a measure of channel characteristics between the source apparatus and the destination apparatus;
calculating a correlation factor between the at least two time-consecutive measures over time;
employing the correlation factor or a value derived therefrom as an estimate of relative movement between the source apparatus and the destination apparatus in determining a transmission parameter; and then
transmitting a transmission signal from the source apparatus to the destination apparatus using the determined parameter.

Figure 1: Different burst dimensions result in different burst error rate

Figure 2: The SINR is strongly affected by the interference from neighbouring cells

Figure 3: The correlation factor curves in downlink subframe. (Downlink PUSC in IEEE802.16e, SNR=12.5dB)

EP 1 890 452 A2

$P_{tx,NB}$

$L_{NB-RN}$

$P_{rx,NB-RN}$

$L_{NB-UE}$

$P_{rx,NB-UE}$

$P_{tx,RN}$

$L_{RN-UE}$

$P_{rx,RN-UE}$

Basestation
$(f_c = f_{NB})$

Relay Node
$(f_c = f_{RN})$

UE

Figure 4

Figure 5

Figure 6: Example TDD frame structure from OFDMA physical layer of the IEEE802.16 standard